(19) Europäisches Patentamt
European Patent Office
Office européen des brevets

(11) EP 4 010 424 B1

(12) **EUROPEAN PATENT SPECIFICATION**

(45) Date of publication and mention of the grant of the patent:
**17.04.2024 Bulletin 2024/16**

(21) Application number: **20746920.6**

(22) Date of filing: **20.07.2020**

(51) International Patent Classification (IPC):
***C08L 51/02*** *(2006.01)* ***C08L 77/00*** *(2006.01)*
***C08L 77/06*** *(2006.01)* ***C08L 81/02*** *(2006.01)*

(52) Cooperative Patent Classification (CPC):
(C-Sets available)
**C08L 77/00; C08L 77/06; C08L 81/02** (Cont.)

(86) International application number:
**PCT/EP2020/070481**

(87) International publication number:
**WO 2021/023502 (11.02.2021 Gazette 2021/06)**

(54) **A POLYPHENYLENE SULFIDE/POLYAMIDE COMPOSITION**

POLYPHENYLENSULFID-/POLYAMIDZUSAMMENSETZUNG

COMPOSITION DE POLY(PHÉNYLÈNE SULFURE)/POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2019 PCT/CN2019/099492**

(43) Date of publication of application:
**15.06.2022 Bulletin 2022/24**

(73) Proprietor: **BASF SE**
**67056 Ludwigshafen am Rhein (DE)**

(72) Inventors:
- **LIU, Chao**
  **Shanghai, 030000 (CN)**
- **HAN, Qiong Jie**
  **Shanghai, 200137 (CN)**
- **CHEN, Xi Yang**
  **Shanghai, 200137 (CN)**

(74) Representative: **BASF IP Association**
**BASF SE**
**GBI-C006**
**67056 Ludwigshafen (DE)**

(56) References cited:
**EP-A2- 0 443 729**
**WO-A1-2016/127354**
**WO-A1-2018/100127**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 77/00, C08L 53/02, C08L 81/02;**
**C08L 77/00, C08L 53/025, C08L 81/02;**
**C08L 77/06, C08K 5/005, C08K 5/098, C08K 7/14, C08L 53/02, C08L 81/02;**
**C08L 77/06, C08K 5/005, C08K 5/098, C08K 7/14, C08L 53/025, C08L 81/02;**
**C08L 81/02, C08K 5/005, C08K 5/098, C08K 7/14, C08L 53/025, C08L 77/06**

## Description

### Field of the Invention

The present invention relates to a polyphenylene sulfide/polyamide (PPS/PA) composition comprising a hydrogenated styrene-diene block copolymer and the articles obtained or obtainable from the PPS/PA composition.

### Background

Polyphenylene sulfide (PPS) is a partially crystalline linear polymer with a high melting point of approximately 280°C. PPS has good high temperature performance and heat resistance, excellent mechanical properties such as high stiffness, excellent chemical resistance, and good dimension stability, and is electrical insulated and inherently flame retardant. PPS is a widely used engineering plastic in various fields, for example, in electric and electronic, automotive, chemical industry and aircraft applications. However, PPS suffers disadvantages of low toughness and low impact resistance due to its rigid structure.

Polyamide(PA) is also a well known engineering plastic and widely used in mechanical, electric and electronic, automotive and transportation applications due to its desirable mechanical property such as strength and toughness, thermal stability, chemical resistance and melt processabiltiy.

Attempts have been made to combine PPS and PA in order to provide polymer blends with balanced properties and advantages from individual components, for example, with improved toughness of PPS and improved melt strength of PA. However, PPS and PA have poor compatibility with each other and therefore blends thereof have problems such as decrease in mechanical strength and deterioration of the surface condition of the molded article produced from PPS/PA blends.

Various compatibilizers have been proposed for improving the compatibility of PPS and PA.

One class of compatibilizers for improving the compatibility of PPS and PA known in the art is epoxy resin containing one or more epoxy groups as described in JPS59155462A. For example, the epoxy resin containing glycidyl group is a common compatibilizer for PPS and PA. Conventional elastomers such as styrene-ethylene/butylene-styrene block copolymer (SEBS) and the maleic anhydride grafted derivative (SEBS-g-MA) have linear triblock structure and low styrene content (<30%) . SEBS and SEBS-g-MA were proposed for improving the compatibility of PPS and Nylon 66, as described in Weihua Tang, et al, "Toughening and Compatilization of Polyphenylene Sulfide/PA66 Blends With SEBS and Maleic Anhydride Grafted SEBS Triblock Copolymers", Journal of Applied Polymer Science, Vol. 106, 2648-2655 (2007). However, such improvement on toughness is quite limited when the content of SEBS is lower than 20 wt%.

EP 0443729 A2 describes PPS/PA compositions comprising a polyphenylene sulfide, a polyamide and an unsaturted carboxylic acid-modified hydrogenated conjugated diene/monovinyl aromatic block copolymer. WO 2018/100127 A1 describes polymer compositions comprising a polyphenylene sulfide, a polyamide, a reinforcing agent and a functionalized, non-aromatic elastomer. In two comparative examples, a triblock copolymer based on styrene and ethylene/butylene functionalized with maleic acid is used instead of the non-aromatic elastomer. WO 2016/127354 A1 describes hydrogenated styrene/conjugated diene block copolymers.

### Summary of the Invention

It is desirable if there is a compatibilizer which may further improve toughness and melt flowability of PPS/PA blends without serious sacrifice of other mechanical properties of PPS/PA blends.

Accordingly, an object of the present invention is to provide a blend of polyphenylene sulfide (PPS) and polyamide (PA) with improved toughness and/or melt flowability. It has been found that the object of the present invention is achieved by a hydrogenated styrene-diene block copolymer as the compatibilizer for PPS and PA.

The present invention thus relates to a polyphenylene sulfide/polyamide composition which comprises A) polyphenylene sulfide, B) polyamide and C) a compatibilizer comprising or consisting of a hydrogenated styrene-diene block copolymer having the following structural formula (I)

$$S^1_p\text{-}D\text{-}S^2_q \qquad (I)$$

wherein $S^1$ and $S^2$, independently from each other, are polymeric blocks derived from a styrenic monomer;

D is a copolymeric block derived from copolymerizing a styrenic monomer and a conjugated diene monomer and hydrogenating ethylenic double bonds, which is an optionally maleic anhydride-grafted block;

p and q, independently from each other, are 0 or 1, provided that at least one of p and q is 1;

the styrenic monomers for deriving $S^1$, $S^2$ and D are same or different; and

all monomer units derived from the styrenic monomers account for 40 to 80 % by weight of the hydrogenated styrene-diene block copolymer.

**Detailed Description of the Invention**

The present invention now will be described in detail hereinafter. It is to be understood that the present invention may be embodied in many different ways and shall not be construed as limited to the embodiments set forth herein. Unless mentioned otherwise, all technical and scientific terms used herein have the same meaning as commonly understood by one of ordinary skill in the art to which this invention belongs. Within the context, the singular forms "a", "an", and "the" include plural referents unless the context clearly dictates otherwise. Thus, for example, reference to "a polyphenylene sulfide" includes combination of two or more polyphenylene sulfide components.
Herein, the PPS/PA composition which comprises A) a polyphenylene sulfide, B) a polyamide and C) a compatibilizer is abbreviated as the polyphenylene sulfide/polyamide composition or PPS/PA composition.

**A) Polyphenylene Sulfide (PPS)**

The polyphenylene sulfide useful for the PPS/PA composition according to the present invention is a polymer having repeating units generally represented by the following structural formula:

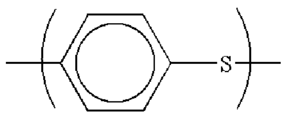
.

It is to be understood that the polyphenylene sulfide useful for the PPS/PA composition according to the present invention is not limited to a homopolymer, which may also be a copolymer having repeating units as shown above and other comonomer repeating units.
Particularly, the polyphenylene sulfide useful for the PPS/PA composition according to the present invention is a polymer having 70 mol % or more, in particular 90 mol % or more of the repeating units as shown above. The polyphenylene sulfide may have less than 30 mol %, preferably less than 10 mol % of repeating units having the following structural formulas,

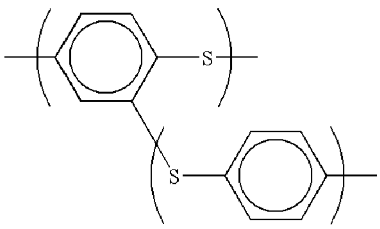 ,
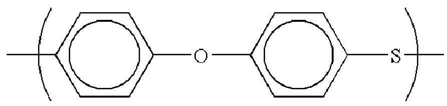 ,
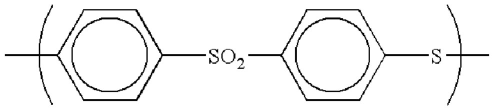 ,
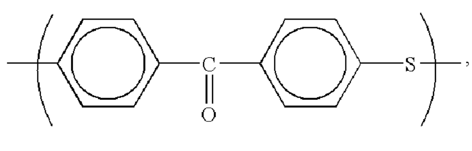 ,
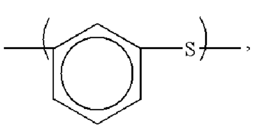 ,
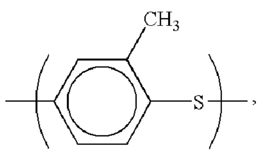 ,
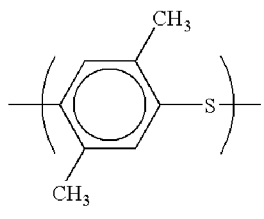
.

The polyphenylene sulfide useful for the PPS/PA composition according to the present invention generally has a melt mass flow rate (MFR) in the range of from 10 to 3,000 g/10min, preferably from 80 to 2,000 g/10min, more preferably from 80 to 300 g/10min, most preferably from 100 to 200 g/10min, as measured according to ISO 1133-1-2011 at 316°C/5kg.

The polyphenylene sulfide useful for the PPS/PA composition according to the present invention may be of various grades without particular restrictions, for example extrusion grade, coating grade, injection-molding grade and fiber grade.

The polyphenylene sulfide useful for the PPS/PA composition according to the present invention may be prepared by any processes known in the art or may be those commercially available, for example, under tradenames Tedur® from Albis Plastic, DIC.PPS from DIC Corporation, DURAFIDE® from Polyplastics Co. Ltd, ECOTRAN® from INITZ, Fortron® from Ticona, Petcoal® from Tosoh, Therma-Tech™ TT9200-5001 from PolyOne Corporation, Ryton® from Solvay Specialty Polymers, Torelina™ from Toray, and NHU-PPS from Zhejiang NHU SPECIAL MAT CO LTD.

The polyphenylene sulfide A) is comprised preferably in a content of 20 to 50 %, more preferably is 20 to 40 %, based on the total weight of the PPS/PA composition as 100%.

**B) Polyamide (PA)**

The polyamide useful for the PPS/PA composition according to the present invention may be any conventional thermoplastic polyamides, such as aliphatic polyamides and/or semi-aromatic polyamides, which may be amorphous, semi-crystalline or crystalline polyamides, and/or polyamide copolymers thereof. For the purpose of the present invention, aliphatic polyamides are more preferable.

The repeating unit of the polyamides is derived from starting material(s) selected from the group consisting of lactam, dicarboxylic acid and diamine, and amino carboxylic acid.

The suitable lactam is preferably a lactam having 6 to 14 carbon atoms, for example butyrolactam, 2-pyrrolidone (γ-butyrolactam), valerolactam, 2-piperidone (δ-valerolactam), ε-caprolactam, caprolactam, decanolactam, undecanolactam, enantholactam (7-heptanelactam), and/or laurolactam, among which ε-caprolactam is more preferable.

The dicarboxylic acid could be aliphatic dicarboxylic acid, cycloaliphatic dicarboxylic acid and/or aromatic dicarboxylic acid. For the purpose of the present invention, aliphatic dicarboxylic acid and/or cycloaliphatic dicarboxylic acid are preferable.

The suitable aliphatic dicarboxylic acid is preferably an aliphatic dicarboxylic acid having 4 to 24 carbon atoms, for example succinic acid, glutaric acid, adipic acid, pimelic acid, suberic acid, azelaic acid, sebacic acid, undecane-1,11-dicarboxylic acid, dodecane-1,12-dicarboxylic acid, fumaric acid and/or itaconic acid.

The suitable cycloaliphatic dicarboxylic acid is preferably a cycloaliphatic dicarboxylic acid comprising at least one carbon backbone selected from the group consisting of cyclohexane, cyclopentane, cyclohexyl methane, dicyclohexyl methane, bis(methylcyclohexyl)methane. More preferably, the cycloaliphatic dicarboxylic acid is selected from cis- and trans-cyclopentane-1,3-dicarboxylic acid, cis- and trans-cyclopentane-1,4-dicarboxylic acid, cis- and trans-cyclohexane-1,2-dicarboxylic acid, cis- and trans-cyclohexane-1,3-dicarboxylic acid, cis- and transcyclohexane-1,4-dicarboxylic acid.

The suitable aromatic dicarboxylic acid is preferably terephthalic acid, isophthalic acid, naphthalene dicarboxylic acids, and/or diphenyl dicarboxylic acids.

The diamine could be aliphatic diamine, cycloaliphatic diamine and/or aromatic diamine. For the purpose of the present invention, aliphatic diamine and/or cycloaliphatic diamine are preferable.

The suitable aliphatic diamine is preferably an aliphatic diamine having 4 to 24 carbon atoms, for example butane diamine, pentane diamine, hexane diamine, heptane diamine, octane diamine, nonane diamine, decane diamine, undecane diamine, dodecane diamine, tridecane diamine, tetradecane diamine, hexadecane diamine, octadecane diamine, octadecene diamine, eicosane diamine, docosane diamine, 2-methylpentane diamine, 2-methyl-1,8-octane diamine, 2,2,4-trimethylhexamethylene diamine, 2,4,4-trimethylhexamethylene diamine, 5-methylnonane-1,9-diamine, and/or 2,4-dimethyloctane diamine.

The suitable cycloaliphatic diamine is preferably bis(3,5-dialkyl-4-aminocyclohexyl)methane, bis(3,5-dialkyl-4-aminocyclohexyl)ethane, bis(3,5-dialkyl-4-aminocyclohexyl)propane, bis(3,5-dialkyl-4-aminocyclohexyl)butane, bis(3-methyl-4-aminocyclohexyl)methane(BMACM or MACM), p-bis(aminocyclohexyl)methane(PACM), isopropylidenedi(cyclohexylamine)(PACP) and/or isophorone diamine(IPDA).

The suitable aromatic diamine is preferably m-xylylene diamine(MXDA), p-xylylene diamine, bis(4-aminophenyl)methane, 3-methylbenzidine, 2,2-bis(4-aminophenyl)propane, 1,1-bis(4-aminophenyl)cyclohexane, 1,2-diaminobenzene, 1,3-diaminobenzene, 1,4-diaminobenzene, 1,2-diaminonaphthalene, 1,3-diaminonaphthalene, 1,4-diaminonaphthalene, 2,3-diaminotoluene, N,N'-dimethyl-4,4'-bephenyl diamine, bis(4-methylaminophenyl)methane, and/or 2,2'-bis(4-methylaminophenyul)propane.

The suitable aminocarboxylic acid is preferably 6-aminocaproic acid, 7-aminoheptanoic acid, 9-aminononanoic acid, 10-aminodecanoic acid, 11-aminoundecanoic acid, and/or 12-aminododecanoic acid.

Particularly, the polyamide useful for the PPS/PA composition according to the present invention is at least one selected from the group consisting of PA 5, PA 6, PA 8, PA 9, PA 10, PA 11, PA 12, PA 13, PA 14, PA 46, PA 48, PA 410, PA 412, PA 55, PA 510, PA 512, PA 66, PA 68, PA 69, PA 610, PA 612, PA 618, PA 88, PA 810, PA 812, PA 99, PA 910, PA 912, PA 1010, PA 1012, PA 1014, PA 1018, PA 1212, PA 1214, PA 1218, PA 6/66, PA 6/12, PA 6/11, PA 66/11, PA 66/12, PA 6/610, PA 66/610, PA 46/6 and PA6/66/610, more preferably is PA 5, PA 6, PA 8, PA 9, PA 10, PA 11, PA 12, PA 13, PA 14, PA 46, PA 48, PA 410, PA 412, PA 55, PA 510, PA 512, PA 66, PA 68, PA 69, PA 610, PA 612, PA 618, PA 88, PA 810, PA 812, PA 99, PA 910, PA 912, PA 1010, PA 1012, PA 1014, PA 1018, PA 1212, PA 1214 and PA 1218, most preferably is PA 5, PA 6, PA 46, PA 66, PA 610, PA 612, PA 910, PA 912, PA 1010, PA 1012, and PA 1212.

The polyamide useful for the PPS/PA composition according to present invention may be those commercially available, for example, under tradenames Zytel® from DuPont, Technyl® from Solvay, Rilsan® and Rilsamid® from Arkema, and Radipol® from Radici Group.

It is preferable that the polyamide useful for the PPS/PA composition according to the present invention has a content of amino end groups in the range of 30 to 100 mmol/kg, preferably 50 to 100 mmol/kg, more preferably 70 to 100 mmol/kg, as measured in accordance with the method described hereinafter in Examples.

The polyamide B) is comprised preferably in a content of 20 to 50 %, more preferably is 20 to 40 %, based on the total weight of the PPS/PA composition as 100%.

**C) Compatibilizer**

The compatibilizer useful for the PPS/PA composition according to the present invention comprises or consisits of a hydrogenated styrene-diene block copolymer having the following structural formula (I)

$$S^1{}_p\text{-D-}S^2{}_q \qquad (I)$$

wherein

$S^1$ and $S^2$, independently from each other, are polymeric blocks derived from a styrenic monomer;

D is a copolymeric block derived from copolymerizing a styrenic monomer and a conjugated diene monomer and hydrogenating ethylenic double bonds, which is an optionally maleic anhydride-grafted block;

p and q, independently from each other, are 0 or 1, provided that at least one of p and q is 1;

the styrenic monomers for deriving $S^1$, $S^2$ and D may be same or different; and

all monomer units derived from the styrenic monomers account for 40 to 80 % by weight of the hydrogenated styrene-diene block copolymer.

Hereinafter, when the hydrogenated styrene-diene block copolymer having the structural formula (I) is mentioned, the expression "the hydrogenated styrene-diene block copolymer" or "the hydrogenated styrene-diene block copolymer according to the present invention" is also used.

In the hydrogenated styrene-diene block copolymer according to the present invention, the copolymeric block D preferably consists of at least two, more preferably at least three segments in which each segment is derived from block copolymerizing a styrenic monomer and a conjugated diene monomer and hydrogenating ethylenic double bonds, and is an optionally maleic anhydride-grafted block.

In the hydrogenated styrene-diene block copolymer according to the present invention, the polymeric blocks $S^1$ and $S^2$ are conventional polystyrenic blocks, preferably formed by living polymerization, more preferably formed by anionically living polymerization of styrenic monomer.

Preferably, the polymeric blocks $S^1$ and $S^2$, independently from each other, account for 8 to 20 %, preferably 8 to 18%, still preferably 8 to 15%, more preferably 10 to 14% by weight of the hydrogenated styrene-diene block copolymer respectively.

In the hydrogenated styrene-diene block copolymer according to the present invention, all monomer units derived from the styrenic monomers preferably account for 50 to 80%, preferably 55 to 75%, more preferably 60 to 75% by weight of the hydrogenated styrene-diene block copolymer.

The styrenic monomers for deriving the polymeric blocks $S^1$ and $S^2$ and the copolymeric block D, independently from each other, may be represented by the general formula

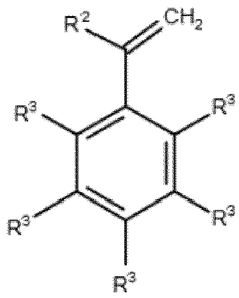

wherein

$R^2$ is hydrogen or alkyl group having 1 to 10 carbon atoms, preferably hydrogen or alkyl group having 1 to 4 carbon atoms, more preferably is methyl group or ethyl group; and

$R^3$ is same or different, and is selected from the group consisting of hydrogen, an aliphatic, cycloaliphatic or aromatic hydrocarbon group having up to 12 carbon atoms, preferably hydrogen or alkyl group having 1 to 10 carbon atoms, more preferably hydrogen or alkyl group having 1 to 4 carbon atoms.

Particularly, the styrenic monomers may be selected from styrene, alpha-methylstyrene, alphaethylstyrene, vinyl toluenes such as 2-methylstyrene, 3-methylstyrene and para-methylstyrene, 2,4-dimethylstyrene, 2,5-dimethylstyrene, para-alpha-dimethylstyrene, 2-ethylstyrene, 3-ethylstyrene, 4-ethylstyrene, 2-isopropyl styrene, 3-isopropyl styrene, 4-isopropyl styrene, vinyl naphthalenes, para-tert-butylstyrene and any combinations thereof. Among others, styrene, alpha-methylstyrene or the combination thereof is preferable.

The conjugated diene monomers for deriving the copolymeric block D may be selected from unsubstituted butadiene, or substituted butadienes such as isoprene, 1,3-pentadiene, 2,3-dimethyl-1,3-butadiene, 1-phenyl-1,3-butadiene or any combinations thereof. Among others, butadiene, isoprene or the combination thereof is preferable.

The compatibilizer C) is comprised preferably in a content of 0.1 to 10 %, preferably 0.5 to 6 %, more preferably 0.5 to 5 %, 1 to 4 % or 1 to 3 %, based on the total weight of the PPS/PA composition as 100%.

In a particular embodiment according to the present invention wherein the copolymeric block D in the hydrogenated styrene-diene block copolymer is not maleic anhydride-grafted, the compatibilizer C) is comprised in a content of 0.1 to 10 %, preferably 0.5 to 6 %, more preferably 0.5 to 5 %, 1 to 4 % or 1 to 3 %, based on the total weight of the PPS/PA composition as 100%.

In a particular embodiment according to the present invention wherein the copolymeric block D in the hydrogenated styrene-diene block copolymer is a maleic anhydride-grafted block, the compatibilizer C) is comprised in a content of 0.1 to 5 %, preferably 0.5 to 4 %, more preferably 1 to 4 % or 1 to 3 %, based on the total weight of the PPS/PA composition as 100%.

In a preferable embodiment, the hydrogenated styrene-diene block copolymer is a star hydrogenated styrene-diene block copolymer having the following structural formula (II) or (III)

$$[S^1\text{-}D\text{-}S^2]_m\text{-}R^1 \qquad (II),$$

or

$$[S^1\text{-}D]_m\text{-}R^1 \qquad (III),$$

wherein

$S^1$ and $S^2$, independently from each other, are polymeric blocks derived from a styrenic monomer;

D is a copolymeric block derived from copolymerizing a styrenic monomer and a conjugated diene monomer and hydrogenating ethylenic double bonds, which is an optionally maleic anhydride-grafted block;

$R^1$ is a residue of a coupling agent;

m represents the number of arms of the star hydrogenated styrene-diene block copolymer, and is a number of at least 3;

the styrenic monomers for deriving $S^1$, $S^2$ and D may be same or different; and

all monomer units derived from the styrenic monomers account for 40 to 80 % by weight of the star hydrogenated styrene-diene block copolymer.

It is to be understood that any description and preferences as described hereinbefore for the polymeric blocks $S^1$, $S^2$ and the copolymeric block D in formula (I) are applicable here for formula (II) and (III).

Herein, when the star hydrogenated styrene-diene block copolymer having the structural formula (II) or (III), or having following formula (IV) or (V) are mentioned, the expression "the star hydrogenated styrene-diene block copolymer" or "the star hydrogenated styrene-diene block copolymer according to the present invention" is also used.

In the hydrogenated styrene-diene block copolymer according to the present invention, the copolymeric block D preferably consists of at least two, preferably at least three segments in which each segment is derived from block copolymerizing a styrenic monomer and a conjugated diene monomer and hydrogenating ethylenic double bonds, and is an optionally maleic anhydride-grafted block.

In a particular embodiment according to the present invention wherein the copolymeric block D in the star hydrogenated styrene-diene block copolymer is not maleic anhydride-grafted, the compatibilizer C) is comprised in a content of 0.1 to 10 %, preferably 0.5 to 6 %, more preferably 0.5 to 5 %, 1 to 4 % or 1 to 3 %, based on the total weight of the PPS/PA composition as 100%.

In a particular embodiment according to the present invention wherein the copolymeric block D in the star hydrogenated styrene-diene block copolymer is a maleic anhydride-grafted block, the compatibilizer C) is comprised in a content of 0.1 to 5 %, preferably 0.5 to 4 %, more preferably 1 to 4 % or 1 to 3 %, based on the total weight of the PPS/PA composition as 100%.

More particularly, the star hydrogenated styrene-diene block copolymer has the following structural formula (IV) or (V)

$$[S^1-(A_x-B_y)_n-S^2]_m-R^1 \qquad (IV),$$

or

$$[S^1-(A_x-B_y)_n]_m-R^1 \qquad (V),$$

wherein

$S^1$ and $S^2$, independently from each other, are polymeric blocks derived from a styrenic monomer,

$A_x$ is a polymeric microblock derived from a styrenic monomer;

$B_y$ is a polymeric microblock derived from polymerizing a conjugated diene and hydrogenating, which may contain remaining ethylenic double bonds and is an optionally maleic anhydride-grafted microblock;

x is the average number of the styrenic monomer units in the range of 1 to 100;

y is the average number of the conjugated diene monomer units in the range of 1 to 170;

n is the average number of the structural unit $-(A_x-B_y)-$ in the range of 3 to 1100;

m represents the number of arms of the star hydrogenated styrene-diene block copolymer, and is a number in the range of 3 to 55;

$R^1$ is a residue of a coupling agent;

each structural unit $-(A_x-B_y)-$ may be derived from styrenic monomer and conjugated diene which are same or different from those for deriving another structural unit $-(A_x-B_y)-$, and the numbers x and y in each structural unit $-(A_x-B_y)-$ may be same or different from those in another structural unit $-(A_x-B_y)-$; and

all monomer units derived from the styrenic monomers account for 40 to 80 % by weight of the star hydrogenated styrene-diene block copolymer.

The term "microblock" in the context of the present invention is intended to mean structural unit composed of a single monomer in each copolymeric block.

It is to be understood that any description and preferences as described hereinbefore for the polymeric blocks $S^1$, $S^2$ and for the styrenic monomer and conjugated diene monomer in copolymeric block D in formula (I) are applicable here for formula (IV) and (V).

There is no particular restriction to the coupling agent. A wide variety of coupling agents are known in the art and include, for example, dihaloalkanes, silicon halides, siloxanes, polyfunctional epoxides, polyalkenyl compounds such as m-divinylbenzene and the like, a silicone-containing compound such as an alkoxysilane, an alkylsilane, an alkyl-alkoxysilane and the like, an ester of a monohydric alcohol and a carboxylic acid such as dimethyl adipate and the like, and an epoxidized oil. Tetraalkoxysilanes such as tetraethoxysilane (TEOS) and tetramethoxysilane; alkyltrialkoxysilanes such as methyltrimethoxysilane (MTMQ); aliphatic diesters such as dimethyl adipate and diethyl adipate; and diglycidyl aromatic epoxy compounds, such as diglycidyl ethers derived from the reaction of bisphenol A with epichlorohydrin are preferable. The coupling agent is more preferably selected from the group consisting of divinyl benzenes, $SiCl_4$ or $SnCl_4$.

In a particular embodiment according to the present invention, the star hydrogenated styrene-diene block copolymer of formula (IV) or (V) has one or more of following preferences (i) to (v):

(i) the average number x of the styrenic monomer units in the polymeric microblock $A_x$ is preferably in the range of 1 to 90, more preferably 1 to 70, and most preferably 1 to 30;

(ii) the average number y of the conjugated diene monomer units is preferably in the range of 1 to 150, more preferably 1 to 90, most preferably 1 to 35;

(iii) the average number n of the structural unit -($A_x$-$B_y$)- is preferably in the range of 5 to 1100, or 10 to 1100, or 20 to 1100, or 30 to 1100, or 300 to 1100, or 650 to 1100, or 900 to 1100;

(iv) the number m of the arms is preferably in the range of 3 to 55, preferably 3 to 40, more preferably 3 to 15, most preferably 3 to 5.

The hydrogenated styrene-diene block copolymer according to the present invention preferably has a hydrogenation degree in the range of 80 to 99.99%, more preferably in the range of 88 to 99%. It is to be understood that the hydrogenation degree refers to the hydrogenation degree of the ethylenic double bonds contained in the structural unit of copolymerized conjugated diene.

In a particular embodiment according to the present invention wherein the polymeric microblock $B_y$ in the star hydrogenated styrene-diene block copolymer is not maleic anhydride-grafted, the compatibilizer C) is comprised in a content of 0.1 to 10 %, preferably 0.5 to 6 %, more preferably 0.5 to 5 %, 1 to 4 % or 1 to 3 %, based on the total weight of the PPS/PA composition as 100%.

In a particular embodiment according to the present invention wherein the polymeric microblock $B_y$ in the star hydrogenated styrene-diene block copolymer is a maleic anhydride-grafted microblock, the compatibilizer C) is comprised in a content of 0.1 to 5 %, preferably 0.5 to 4 %, more preferably 1 to 4 % or 1 to 3 %, based on the total weight of the PPS/PA composition as 100%.

The hydrogenated styrene-diene block copolymer and the star hydrogenated styrene-diene block copolymer according to the present invention may be prepared by any processes known in the art, for example by the process as described in WO2016127355A. The process as described in WO2016127355A includes

(a) first stage of polymerization: anionically living polymerizing a styrenic monomer,

(b) second stage of polymerization: when the monomer conversion of the first stage of polymerization is at least 95%, charging a monomer mixture of a conjugated diene monomer and a styrenic monomer via at least two batches and conducting the second stage of polymerization, wherein the latter batch is charged when the monomer conversion of the preceding batch is at least 95%, and the species of the styrenic monomer and conjugated diene monomer and/or proportions thereof of each batch may be identical or different,

(c) optional third stage of polymerization: charging and polymerizing a styrenic monomer,

(d) ripening: when the monomer conversion of the second stage of polymerization or, if present, of the third stage of polymerization is at least 95%, ripening, preferably for 20 to 120 minutes, to obtain linear polymers,

(e) optionally coupling: charging a coupling agent to couple the linear polymers to obtain a star polymer, and

(f) hydrogenating and optionally after-treatment.

It is preferable that the first, second and third stage of polymerizations are carried out at a temperature in the range of 50 to 100 °C. The styrenic monomers used in the first, second and third stages may be identical or different.

In the second stage of polymerization, the monomer mixture of the conjugated diene monomer and the styrenic monomer is preferably charged into the polymerization system via 3 to 60 batches, more preferably 5 to 55 batches, most preferably 8 to 40 batches. Charging the monomer mixture via batches can result in microblocks of the styrenic monomer and of the conjugated diene monomer. Preferably, each batches of the monomer mixture have the same weight. Preferably, each batches of the monomer mixture have the same monomer proportions. The styrenic monomer in each batch may account for 20 to 70%, preferably 30 to 60% by weight of the monomer mixture in each batch. The styrenic monomer may account for 20 to 64%, preferably 30 to 60%, more preferably 40 to 60% by weight of the monomer mixture in the second stage of polymerization.

In the hydrogenation stage, the hydrogenation is preferably carried out at a temperature in the range of 60 to 140 °C and a pressure in the range of 0.8 to 2.2 MPa in the presence of a hydrogenation catalyst.

Useful initiators for the anionic living polymerization may include alkyl lithium or other organolithium, such as n-butyllithium, sec-butyllithium or tert-butyllithium.

Useful solvents for the first, second and third stage of the polymerization may be conventional solvents for anionic living polymerization which will not react with the living anionic group of the formed polymer, preferably nonpolar aliphatic hydrocarbon solvents. The examples of the nonpolar aliphatic hydrocarbon solvent include, but are not limited to, cycloalkanes such as cyclopentane, cyclohexane, cycloheptane and/or cyclooctane, toluene and benzene.

The monomer conversion may be measured by gas phase chromatography via common method.

Various suitable deactivators, coupling agents, chain terminators known in the art, for example from WO 2016/127355A1, may be used for the polymerization, without particular restrictions.

The hydrogenated styrene-diene block copolymer and the star hydrogenated styrene-diene block copolymer according to the present invention has a number average molecular weight (Mn) in the range of 20,000 to 800,000 g/mol, preferably 40,000 to 600,000 g/mol, more preferably 50,000 to 400,000 g/mol, still preferably 50,000 to 300,000 g/mol, and most preferably 100,000 to 300,000 g/mol, as measured by Gel Permeation Chromatography (GPC) in THF, with polystyrene standards. It is preferable that the hydrogenated styrene-diene block copolymer according to the present invention has a polydispersity (Mw/Mn) in the range of 1.01 to 1.5, more preferably 1.01 to 1.3, and most preferably 1.01 to 1.25.

The hydrogenated styrene-diene block copolymer and the star hydrogenated styrene-diene block copolymer according to the present invention may be a thermoplastic elastomer.

In a futher embodiment of the present invention, the compatibilizer is a thermoplastic elastomer comprising or consisting of,

(1) 55 to 92% of the hydrogenated styrene-diene block copolymer or the star hydrogenated styrene-diene block copolymer according to the present invention; and

(2) 8 to 45 % of a monodispersed polystyrene;

based on the total weight of the thermoplastic elastomer.

Any description and preferences as given hereinbefore for the hydrogenated styrene-diene block copolymer of formula (I),and for the star hydrogenated styrene-diene block copolymer of formula (II), (III), (IV) and (V) are applicable here for the component (1) contained in the thermoplastic elastomer comprising or consisting of the hydrogenated styrene-diene block copolymer or the star hydrogenated styrene-diene block copolymer and the monodispersed polystyrene.

The monodispersed polystyrene is preferably an anionically polymerized polystyrene having a number average molecular weight (Mn) of 20,000 to 50,000 g/mol measured by Gel Permeation Chromatography (GPC) and a polydispersity (Mw/Mn) in the range of 1.01 to 1.20. The polymerization for generating the monodispersed polystyrene may be carried out via conventional anionic polymerization in the presence of an activator, a catalyst in a solvent.

It is to be understood that the thermoplastic elastomer comprising or consisting of the hydrogenated styrene-diene block copolymer or the star hydrogenated styrene-diene block copolymer and the monodispersed polystyrene is not a physical mixture of the components, which is resulted from polymerization of respective monomers of the components (1) and (2) instead.

The thermoplastic elastomer comprising or consisting of the hydrogenated styrene-diene block copolymer or the star hydrogenated styrene-diene block copolymer and the monodispersed polystyrene has a microphase separation structure wherein the polystyrene is present in form of disperse phases in the polymer matrix, including a large polystyrene disperse phase with average particle size of 400 to 900 nm and a small polystyrene disperse phase with average particle

size of 10 to 95 nm, as oberseved via Atomic Force Microscopy.

The thermoplastic elastomer comprising or consisting of the hydrogenated styrene-diene block copolymer or the star hydrogenated styrene-diene block copolymer and the monodispersed polystyrene preferably has two glass transition temperatures (Tgs) below 60 °C, as determined by differential scanning calorimetry (DSC) method at a heating rate of 10 K/min. Particularly, the thermoplastic elastomer has a lower Tg between -35 °C to -10 °C, and the higher Tg between 10 °C to 30 °C.

The thermoplastic elastomer comprising or consisting the hydrogenated styrene-diene block copolymer, or the star hydrogenated styrene-diene block copolymer and the monodispersed polystyrene may be prepared by any processes known in the art, for example by the process as described in WO2016127353A. The process as described in WO2016127353A includes

(a) first polymerization stage: anionically living polymerizing a styrenic monomer to a monomer conversion of at least 95%, and partially deactivating the living species in a proportion of 30 to 65 % by weight to obtain the monodispersed polystyrene, and then adding a styrenic mononer for further polymerization or directly proceeding to the second polymerization stage,

(b) second polymerization stage: when the monomer conversion of the first polymerization stage is at least 95%, charging a monomer mixture of a conjugated diene monomer and a styrenic monomer via at least two batches and conducting the second polymerization stage, wherein the latter batch is charged when the monomer conversion of the preceding batch is at least 95%, and the species of the styrenic monomer and conjugated diene monomer and/or proportions thereof of each batch may be identical or different,

(c) optional third polymerization stage: charging and polymerizing a styrenic monomer,

(d) ripening: when the monomer conversion of the second polymerization stage or if present, of the third polymerization stage is at least 95%, ripening to obtain linear polymers,

(e) optionally coupling: charging a coupling agent to couple the linear polymers to obtain a star polymer, and

(f) subjecting the product to deactivating and hydrogenating.

The species of the styrenic monomer used in the first, second and third stages may be identical or different. It is preferable that the polymerization is carried out at a temperature in the range of 50 to 100°C.

In the hydrogenation stage, the hydrogenation is preferably carried out at a temperature in the range of 60 to 140 °C and a pressure in the range of 0.8 to 2.2 MPa in the presence of a hydrogenation catalyst.

Various suitable initiators, deactivators, coupling agents, chain terminators and solvents known in the art, for example from WO 2016/127353A1, may be used for the polymerization, without particular restrictions.

In case that the hydrogenated styrene-diene block copolymer or the star hydrogenated styrene-diene block copolymer contains maleic anhydride grafting units, the grafting may be carried out according to any conventional processes. For the purpose of the present invention, maleic anhydride is also useful as a chain terminator. Particularly, the maleic anhydride grafting units account for 0 to 3 wt%, preferably 1 to 2 wt% of the hydrogenated styrene-diene block copolymer or the star hydrogenated styrene-diene block copolymer.

**The Composition Comprising Polyphenylene Sulfide, Polyamide and the Compatibilizer** (PPS/PA Composition)

The PPS/PA composition according to the present invention preferably comprises

A) 20 to 50 % by weight of the polyphenylene sulfide;
B) 20 to 50 % by weight of the polyamide; and
C) 0.1 to 10 %, preferably 0.5 to 6 %, more preferably 0.5 to 5 %, 1 to 4 % or 1 to 3 %, by weight of the compatibilizer;

based on the total weight of the PPS/PA composition as 100 %.

The PPS/PA composition according to the present invention may further comprise D) a reinforcing agent. Examples of the reinforcing agent include fibrous reinforcing agents, for example inorganic and carbonaceous fibers such as glass fibers, and hollow or solid granular reinforcing agents such as silicates, metal oxides, carbonates, sulfates, glass beads, silica, boron nitride and/or silicon carbide. Glass fibers are most preferable as the reinforcing agent.

The reinforcing agent may be comprised in the PPS/PA composition according to the present invention in an amount in the range of 10 to 50%, preferably 20 to 40%, based on the total weight of the PPS/PA composition.

The PPS/PA composition according to the present invention may further comprise at least one additive selected from lubricant, stabilizer (including for example thermal, light, radiation or hydrolysis stabilizers), surface effect additives, plasticizer, dye, colorant, antioxidant, UV absorber, flow modifier, demolding agent, flame retardant and antistatic agent. There is no particular restriction to the at least one additive. Those additives each may be used in a conventional amount known in the art, for example 0.01 to 2% by weight based on the total weight of the PPS/PA composition. In case that more than one additive is contained in the PPS/PA composition, the total amount of the additives is generally no more than 10% by weight based on the total weight of the PPS/PA composition.

Useful lubricants for the PPS/PA composition according to the present invention are not particularly limited, for example an ester or amide of fatty acids having from 10 to 40 carbon atoms, polyethylene wax, EVA wax, oxidized polyethylene wax, fatty alcohols, fatty acids, montan wax, silicone wax, alkali metal and alkaline earth metal salts of fatty acids, such as calcium stearate, zinc stearate, magnesium behenate and/or magnesium stearate. A preferred lubricant is calcium stearate.

The lubricant is preferably comprised in the PPS/PA composition according to the present invention in an amount of about 0 to 3 %, more preferably about 0.01 to 2 %, 0.1 to 1 % or 0.2 to 0.8 %, based on the total weight of the PPS/PA composition.

Useful light stabilizer is hindered amine light stabilizer ('HALS'), examples of hindered aminelight stabilizer are bis(2,2,6,6-tetramethyl-4-piperidyl) sebacate, bis(2,2,6,6-tetramethyl-4-piperidyl) succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethylpiperidin-4-yl) butyl(3,5-di-tert-butyl-4-hydroxybenzyl)malonate, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethyl-piperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decan-2,4-dione, bis(1-octyloxy-2,2,6,6-tetramethylpiperidyl)sebacate, bis(1-octyloxy-2,2,6,6-tetramethylpiperidy)succinate, 4-butylamino-2,2,6,6-tetramethyl-4-piperidine, N-(2,2,6,6-tetramethyl-4-piperidyl)-n-dodecylsuccinimid, N-(1,2,2,6,6-pentamethyl-4-piperidyl)-n-dodecylsuccinimid, 8-acetyl-3-dodecyl-7,7,9,9-tetramethyl-1,3,8-triazaspiro[4.5]decane-2,4-dione, 3-dodecyl-1-(2,2,6,6-tetramethyl-piperidyl)pyrrolidine-2,5-dione and 3-dodecyl-1-(1,2,2,6,6-pentamethyl-4-piperidyl)pyrrolidine-2,5-dione.

Useful antioxidants for the PPS/PA composition according to the present invention are not particularly limited, for example aromatic amine-based antioxidant, hindered phenol-based antioxidant, phosphite-based antioxidant, metal and salts thereof, and iodides.

Examples of aromatic amine-based antioxidants are poly(1,2-dihydro-2,2,4-trimethylquinoline), bis(4-octylphenyl)amine, 4,4'-bis($\alpha$,$\alpha$-dimethylbenzyl)diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamine, and/or N,N'-bis(methylphenyl)-1,4-benzenediamine.

Examples of hindered phenol-based antioxidants are poly(oxy-1,2-ethanediyl)-alpha-[3-[3,5-bis(1,1-dimethylethyl)-4-hydroxyphenyl]-1-oxopropyl]-omega-[3-[3,5-bis(1,1-dimethylethyl)-4-hydroxyphenyl]-1-oxopropoxy], 2,4-bis[(octylthio)methyl]-o-cresol, octyl-3,5-di-tert-butyl-4-hydroxy-hydrocinnamate, 3,5-bis(1,1-dimethylethyl)-4-hydroxybenzenepropanoic acid C7-C9-branched alkyl ester, 2,4-bis[(dodecylthio)methyl]-o-cresol, 4,4'-butylidene bis-(3-methyl-6-tertbutylphenol), 3,5-bis(1,1-dimethylethyl)-4-hydroxybenzenepropanoic acid octadecyl ester, pentaerythritol tetrakis(3-(3,5-di-tert-butyl-4-hydroxyphenyl)propionate), triethylene glycol-bis[3-(3-tert-butyl-5-methyl-4-hydroxyphenyl)propionate], 2,4-bis(n-octylthio)-6-(4-hydroxy-3,5-di-tert-butylanilino)-1,3,5-triazine, tris-(3,5-di-tert-butyl-4-hydroxybenzyl)-isocyanurate, 2,2-thiodiethylene bis[3-(3,5-di-tert-butyl-4-hydroxyphenyl)propionate], and/or Irganox® 1098 from BASF SE.

Examples of phosphite-based antioxidants are tris(2,4-di-tert-butylphenyl) phosphite (Irgafos® 168, BASF SE), bis(2,4-di-tert-butylphenyl)pentaerythrityl diphosphite (Ultranox® 626, Chemtura), bis(2,6-di-tert-butyl-4-methylphenyl) pentaerythritol diphosphite (ADK Stab PEP-36, Adeka), bis(2,4-dicumylphenyl )pentaerythrityl diphosphite (Doverphos® S-9228, Dover Chemical Corporation), tris(nonylphenyl) phosphite (Irgafos® TNPP, BASF SE), (2,4,6-tri-t-butylphenol)-2-butyl-2-ethyl-1,3-propanediol phosphite (Ultranox® 641, Chemtura) and Hostanox® P-EPQ from Clariant.

Example of metal and salts thereof are copper, iron, copper iodide, potassium iodide, copper bromide and potassium bromide.

Examples of commercial antioxidant are the combination of copper salts with iodides, such as Brüggolen® H3350 from Brüggemann-Gruppe, or Polyad® PB201 from PolyAd Services.

The antioxidant is preferably comprised in the PPS/PA composition according to the present invention in an amount of about 0 to 2 %, more preferably of about 0.01 to 1 % or about 0.1 to 1 %, and most preferably of about 0.2 to 0.8 %, based on the total weight of the PPS/PA composition.

Useful colorants for the PPS/PA composition according to the present invention are not particularly limited, for example carbon black, iron oxide, titanium dioxide, ultramarine blue, zinc sulfide, phthalocyanines, quinacridones, perylenes, nigrosin and/or anthraquinones.

In a particular embodiment according to the present invention, the PPS/PA composition according to the present invention comprises

A) 20 to 50 %, preferably 20 to 40 %, by weight of the polyphenylene sulfide;
B) 20 to 50 %, preferably 20 to 40 %, by weight of the polyamide;
C) 0.1 to 10 %, preferably 0.5 to 6 %, more preferably 0.5 to 5 %, 1 to 4 % or 1 to 3 % by weight of the compatibilizer;
D) 10 to 50 %, preferably 20 to 40%, by weight of the reinforcing agent, preferably glass fiber; and
E) optionally, no more than 10 % by weight of any additional additives,

based on the total weight of the PPS/PA composition as 100 %.

In a more particular embodiment according to the present invention, the PPS/PA composition according to the present invention comprises

A) 20 to 40 % by weight of the polyphenylene sulfide;
B) 20 to 40 % by weight of the polyamide;
C) 0.5 to 6 %, preferably 0.5 to 5 %, more preferably 1 to 4 % or 1 to 3 %, by weight of the compatibilizer;
D) 20 to 40 %, by weight of a reinforcing agent; and
E) a lubricant and an antioxidant, each in an amount of 0.1 to 1 % by weight, preferably 0.2 to 0.8 % by weight,

based on the total weight of the PPS/PA composition as 100 %.

In a further particular embodiment according to the present invention, the PPS/PA composition according to the present invention comprises

A) 20 to 50 %, preferably 20 to 40 %, by weight of the polyphenylene sulfide;
B) 20 to 50 %, preferably 20 to 40 %, by weight of the polyamide;
C) 0.1 to 10 %, preferably 0.5 to 6 %, more preferably 0.5 to 5 %, 1 to 4 % or 1 to 3 % by weight of the compatibilizer, in which the copolymeric block D or the polymeric microblock $B_y$ is not maleic anhydride-grafted;
D) 10 to 50 %, preferably 20 to 40 %, by weight of the reinforcing agent, preferably glass fiber; and
E) 0 to 10% by weight of any additional additives,

based on the total weight of the PPS/PA composition as 100 %.

In a yet particular embodiment according to the present invention, the PPS/PA composition according to the present invention comprises

A) 20 to 50 %, preferably 20 to 40 %, by weight of the polyphenylene sulfide;
B) 20 to 50 %, preferably 20 to 40 %, by weight of the polyamide;
C) 0.1 to 5 %, preferably 0.5 to 4 %, more preferably 1 to 4 % or 1 to 3 %, by weight of the compatibilizer, in which the copolymeric block D or the polymeric microblock $B_y$ is a maleic anhydride-grafted block or microblock;
D) 10 to 50 %, preferably 20 to 40%, by weight of the reinforcing agent, preferably glass fiber; and
E) 0 to 10 % by weight of any additional additives,

based on the total weight of the PPS/PA composition as 100 %.

In another particular embodiment according to the present invention, the polyphenylene sulfide/polyamide composition according to the present invention comprises

A) 20 to 40 % by weight of the polyphenylene sulfide;
B) 20 to 40 % by weight of the polyamide;
C) 0.1 to 10 %, preferably 0.5 to 6 %, by weight of the compatibilizer, in which the copolymeric block D or the polymeric microblock $B_y$ is not maleic anhydride-grafted;
D) 20 to 40% by weight of the reinforcing agent, preferably glass fiber; and
E) 0 to 10 % by weight of any additional additives;

or

A) 20 to 40 % by weight of the polyphenylene sulfide;
B) 20 to 40 % by weight of the polyamide;
C) 0.1 to 5 %, preferably 0.5 to 4 % by weight of the compatibilizer, in which the copolymeric block D or the polymeric

microblock $B_y$ is a maleic anhydride-grafted block or microblock;
D) 20 to 40% by weight of the reinforcing agent, preferably glass fiber; and
E) 0 to 10% by weight of any additional additives,

based on the total weight of the polyphenylene sulfide/polyamide composition as 100 %.

The PPS/PA composition according to the present invention may be prepared or processed by various known methods. For example, the PPS/PA composition according to the present invention may be prepared or processed through an extruder by introducing the polyamide, the compatibilizer, the polyphenylene sulfide, the lubricant and the antioxidant in a feeding zone, and introducing the reinforcing agent in a downstream feeding zone, kneading and extruding. The components such as the polyamide may be dried beforehand when necessary. It is to be understood that the components may be introduced via different hoppers depending on the forms or properties thereof, in case that the components are introduced into the same feeding zone. For Example, the PPS, antioxidant and lubricant may be introduced into the extruder via the same hopper such as powder hopper, and the polyamide and compatibilizer may be introduced into the same zone via a separate hopper such as granule hopper.

The second aspect of the present invention relates to use of the above-described hydrogenated styrene-diene block copolymer or the thermoplastic elastomer comprising or consisting of the hydrogenated styrene-diene block copolymer or the star hydrogenated styrene-diene block copolymer and the monodispersed polystyrene as a compatibilizer for polyphenylene sulfide and polyamide in a blend. The compatibilizer is preferably used in an amount of 0.1 to 10 %, more preferably 0.5 to 6 %, most preferably 0.5 to 5 %, 1 to 4 % or 1 to 3 %, based on the total weight of the blends as 100%.

In a particular embodiment according to the second aspect of the present invention, the compatibilizer, in which the copolymeric block D is not maleic anhydride-grafted, is preferably used in a content of 0.1 to 10 %, preferably 0.5 to 6 %, more preferably 0.5 to 5 %, 1 to 4 % or 1 to 3 %, based on the total weight of the blend as 100%.

In a particular embodiment according to the second aspect of the present invention, the compatibilizer, in which the copolymeric block D is a maleic anhydride-grafted block, is preferably used in a content of 0.1 to 5 %, preferably 0.5 to 4 %, more preferably 1 to 4 % or 1 to 3 %, based on the total weight of the blend as 100%.

The polyphenylene sulfide A) preferably has a melt mass flow rate (MFR) in the range of from 10 to 3,000 g/10min, more preferably from 80 to 2,000 g/10min, 80 to 300 g/10min, most preferably 100 to 200 g/10min, as measured according to ISO 1133-1-2011 at 316°C/5kg.

The polyamide B) is preferably selected from aliphatic polyamides. The polyamide (B) preferably has a content of amino end groups in the range of 30 to 100 mmol/kg, more preferably 50 to 100 mmol/kg, most preferably 70 to 100 mmol/kg.

The third aspect of the present invention relates to a process for preparing a blend comprising polyphenylene sulfide and polyamide wherein the above-described hydrogenated styrene-diene block copolymer or thermoplastic elastomer comprising or consisting of the hydrogenated styrene-diene block copolymer or the star hydrogenated styrene-diene block copolymer and the monodispersed polystyrene is used as a compatibilizer for the polyphenylene sulfide and the polyamide. The compatibilizer is preferably used in a content of 0.1 to 10%, more preferably 0.5 to 6 %, most preferably 0.5 to 5 %, 1 to 4 % or 1 to 3 %, based on the total weight of the blend as 100%.

In a particular embodiment according to the third aspect of the present invention, the compatibilizer, in which the copolymeric block D is not maleic anhydride-grafted, is preferably used in a content of 0.1 to 10 %, preferably 0.5 to 6 %, more preferably 0.5 to 5 %, 1 to 4 % or 1 to 3 %, based on the total weight of the blend as 100%.

In a particular embodiment according to the third aspect of the present invention, the compatibilizer, in which the copolymeric block D is a maleic anhydride-grafted block, is preferably used in a content of 0.1 to 5 %, preferably 0.5 to 4 %, more preferably 1 to 4 % or 1 to 3 %, based on the total weight of the blend as 100%.

The polyphenylene sulfide A) preferably has a melt mass flow rate (MFR) in the range of from 10 to 3,000 g/10min, more preferably from 80 to 2,000 g/10min, 80 to 300 g/10min, most preferably 100 to 200 g/10min, as measured according to ISO 1133-1-2011 at 316°C/5kg.

The polyamide B) is preferably selected from aliphatic polyamides. The polyamide (B) preferably has a content of amino end groups in the range of 30 to 100 mmol/kg, more preferably 50 to 100 mmol/kg, most preferably 70 to 100 mmol/kg.

The fourth aspect of the present invention relates to an article obtained or obtainable from the PPS/PA composition according to the present invention.

The invention will be further described by reference to the following Examples. The Examples are set forth by way of illustration and are not intended to limit the scope of the invention.

## EXAMPLES

Materials used in the following Examples are summarized in Table 1.

Table 1

| Name | Description |
|---|---|
| Ultramid® RX2127 | PA66, having a viscosity number (VN) of 142 to 158 ml/g according to ISO 307 and a content of amino end groups of 86-100 mmol/kg, commercially available from BASF SE, which was dried at a temperature of 130°C for 4 hours beforehand. |
| PPS | A polyphenylene sulfide having a crosslinked structure, with MFR of 110 g/10min. |
| ADVANTEX® 995-10P | A type of glass fiber, commercially available from Owens Corning, U.S., working as the reinforcing agent. |
| Kraton® FG1924 G | A Linear SEBS, 1 wt% maleic anhydride (MA) grafted, commercially available from Kraton Polymers LLC, U.S., working as a compatibilizer, which has a polystyrenic unit content of 13wt%, butenic unit content of 38 wt% and ethylene unit content of 48 wt%. |
| Oretel® HES 6702 | Star SEBS commercially available from Ningbo Oretel Polymer Co., Ltd, China, working as the compatibilizer, which has polystyrenic unit content of 67.1 wt%, butenic unit content of 6.7 wt% and ethylene unit content of 26.2 wt%, and has a tensile strength of 28 Mpa according to ASTM D412, a tensile stress at 300% elongation of 17Mpa according to ASTM D412, an elongation at break of 400% according to ASTM D624, which are all measured as a film coated via a toluene solution, and a tear strength of 52KN/m according to ASTM D412. |
| Oretel® HES 6831 | A GMA-grafted star SEBS commercially available from Ningbo Oretel Polymer Co., Ltd, China, working as the compatibilizer, which has polystyrenic unit content of 63.0 wt%, butenic unit content of 6.6 wt%, ethylene unit content of 28.9 wt% and a maleic anhydride grafting unit content of 1.5 wt%, and has a tensile strength of 23 MPa according to ASTM D412, a tensile stress at 300% elongation of 8.8Mpa according to ASTM D412, an elongation at break of 445% according to ASTM D624, which are all measured as a film coated via a toluene solution. |
| Lotader® AX8900 | A random terpolymer of ethylene, acrylic ester and glycidyl methacry late, working as the compatibilizer, which has a polymerized methyl acrylate content of 24 wt% and a polymerized glycidyl methacrylate content of 8 wt%, commercially available from Arkema, France. |
| Calcium Stearate | Working as the lubricant. |
| Antioxidants Irganox® 1098 | N,N'-hexane-1,6-diylbis(3-(3,5-di-tert-butyl-4-hydroxyphenyl-propionamide)), commercially available from BASF SE, working as the antioxidant. |

Following descriptions were followed for characterizing the materials used or obtained in the Examples, unless otherwise specified.

Content of Amino End Groups:

The amino end group content is measured by dissolving 1.0 g polyamide in 30 ml of a phenol-methanol mixture (in a weight ratio of 3: 1) at 92 °C. The obtained solution after cooling is titrated with 0.02 mol/L HCl at 25 °C and measured in Metrohm Titrando 905, Swiss, through which the titration, data computing and result calculation were carried out automatically. The calculation of the amino end group content is in accordance with the following equation:

$$A = \frac{(V - V_0) * F * 1000}{E * (100 - \text{water content\% of the sample})}$$

wherein

A represents the amino end group content (meq/kg);
V represents the HCl consumption (ml);
E represents the sample amount (g);
F represents the calibration factor;
$V_0$ represents the HCl consumption for blank (ml).

The calibration factor F is determined by using tris(hydroxymethyl)aminomethane as a standard. An amount between 30 and 40 g of tris(hydroxymethyl)aminomethane which has been dried at 120°C and cooled is dissolved in 30 mL phenol-methanol mixture (in a weight ratio of 3 : 1) and titrated with the 0.02 mol/L HCl. The calibration factor F is calculated in accordance with the following equation:

$$F = \frac{E' * 1000}{121.14 * V'}$$

wherein

V' represents the HCl consumption (ml); and
E' represents the amount of tris(hydroxymethyl)aminomethane (g).

If the calculated value for the amino end group content is 90 mmol/kg or less, the calculated value is determined as the amino end group content of the polyamide. If the calculated value for the amino end group content is higher than 90 mmol/kg, the measurement is repeated with 0.5 g polyamide, and the calculated value of this second measurement is determined as the amino end group content of the polyamide.

SEBS Material Characterization:

The respective monomeric unit contents of Kraton® FG1924 G, Oretel® HES 6702 and Oretel® HES 6831 are determined via $^{13}C$ NMR under 150MHz in tetrachloroethane $C_2D_2Cl_4$ at 100°C.

Tensile Test:

The test is taken for measurement of a material's tensile strength at break, modulus, and elongation at break by Zwick Z050 tensile testing machine in accordance with ISO527-1-2012.

Charpy Impact Test:

The test is taken for measurement of a material's toughness by Ceast Resil Impactor PIN 6958 in accordance with ISO179-1-2010 at 23°C.

Melt Flow Test:

Material's melt flow rate is measured by GÖTTFERT's mi-2 model Melt Index Test device in accordance with ISO 1133-1-2011. The polyphenylene sulfide (PPS) is measured for melt mass flow rate (MFR) value at a condition of 316 °C/5kg, and the molding is measured for melt volume flow rate (MVR) value at a condition of 290 °C/5kg, unless otherwise specified.

Material's melt flow is also measured by spiral flow test for providing an indicator of actual injection molding flow performance. A mold having a spiral flow channel emanating from the center with a depth of 2mm, width of 5mm and length of 115cm is used for the test. The longest distance between any two points of the outermost wall of the channel is 15.0 cm and the shortest distance between any two points of the outermost wall of the channel is 3.7 cm. The channel has notches etched every 1 centimeter, which are numbered every five centimeters for identifying the distance from the center. The melt to be tested is injected at 290 °C and 500 bar from a sprue at the center of the spiral and flows along the channel of the mold maintained at a temperature of 80 °C. The melt flow distance until the flow stops is recorded. The longer the flow distance, the better the melt flow performance for injection molding.

Five compositions were compounded and melt-extruded in accordance with the formulations and conditions shown in Table 2 below, via a twin-screw extruder ZSK26 (Coperion GmbH, Germany) under a series of temperatures in the range of 180 °C to 300 °C at a screw speed of 300 to 350 rpm, pelletized and dried to obtain PPS/PA pellets.

The dried pellets were further processed in an injection molding machine ARBURG 370C (Arburg GmbH + Co KG, Germany) under the conditions shown in Table 2 below to provide test specimens.

Table 2

| Formulation, wt% | | Ref.1 | Ref. 2 | Ex.1 | Ex. 2 | Ex. 3 |
|---|---|---|---|---|---|---|
| Ultramid® RX2127 | | 31 | 31 | 31 | 31 | 29 |
| PPS | | 31 | 31 | 31 | 31 | 29 |
| Glass Fiber 995-10P ADVANTEX | | 35 | 35 | 35 | 35 | 35 |
| Kraton FG1924 | | - | 2 | - | - | - |
| Oretel® HES6702 | | - | - | 2 | - | 6 |
| Oretel® HES6831 | | - | - | - | 2 | - |
| Lotader® AX8900 | | 2 | - | - | - | - |
| Calcium Stearate | | 0.5 | 0.5 | 0.5 | 0.5 | 0.5 |
| Antioxidants 1098 | | 0.5 | 0.5 | 0.5 | 0.5 | 0.5 |
| Total | | 100 | 100 | 100 | 100 | 100 |
| | | | | | | |
| **Compounding** | | | | | | |
| Throughput | Kg/h | 25 | 25 | 25 | 25 | 25 |
| Die pressure | Bar | 52 | 54 | 11 | 18 | 14 |
| Melt temperature | °C | 268 | 268 | 278 | 276 | 271 |
| | | | | | | |
| **Molding** | | | | | | |
| Injection pressure | Bar | 715 | 720 | 695 | 710 | 700 |
| Melt temperature | °C | 285 | 285 | 280 | 285 | 285 |
| Mold tenmperature | °C | 80 | 80 | 80 | 80 | 80 |
| | | | | | | |
| **Tensile Test** | | | | | | |
| Tensil strength at break | MPa | 177 | 195 | 184 | 191 | 173 |
| Modulus | MPa | 12380 | 12933 | 12175 | 12267 | 11720 |
| **Charpy Impact Test** | | | | | | |
| Unnotched Charpy strength | $KJ/m^2$ | 66.9 | 67.5 | 74.8 | 73.0 | 78.5 |
| **Melt Flow Test** | | | | | | |
| MVR (290°C, 5kg) | cc/10min | 13.8 | 19.2 | 22.4 | 21.0 | 21.2 |
| Spiral (290°C, 500bar) | cm | 46.0 | 47.0 | 48.0 | 48.0 | 48.0 |

It can be seen from the test results as shown in Table 2, the PPS/PA compositions according to Examples 1 to 3 result in improved toughness (Charpy impact) and melt flow properties. Compared to the PPS/PA blends of Reference 1, the unnotched Charpy strength is improved by 9 to 17.3% with the compositions according to Examples 1 to 3, while the unnotched Charpy strength is improved by only 0.9% with the PPS/PA compositions comprising SEBS having a lower polystyrenic unit content. It can also be seen that the PPS/PA compositions according to Examples 1 and 2 result in the remarkable increase of toughness, flow ability and tensile performances at the same time.

## Claims

1. A polyphenylene sulfide/polyamide composition which comprises A) polyphenylene sulfide, B) polyamide and C) a compatibilizer comprising or consisting of a hydrogenated styrene-diene block copolymer having the following structural formula (I)

$$S^1_p\text{-}D\text{-}S^2_q \qquad \text{(I)}$$

wherein $S^1$ and $S^2$, independently from each other, are polymeric blocks derived from a styrenic monomer;
D is a copolymeric block derived from copolymerizing a styrenic monomer and a conjugated diene monomer and hydrogenating ethylenic double bonds, which is an optionally maleic anhydride-grafted block;
p and q, independently from each other, are 0 or 1, provided that at least one of p and q is 1;
the styrenic monomers for deriving $S^1$, $S^2$ and D are same or different; and
all monomer units derived from the styrenic monomers account for 40 to 80 % by weight of the hydrogenated styrene-diene block copolymer.

2. The polyphenylene sulfide/polyamide composition according to claim 1, wherein the compatibilizer is comprised in a content of 0.1 to 10 %, preferably 0.5 to 6%, based on the total weight of the polyphenylene sulfide/polyamide composition as 100%.

3. The polyphenylene sulfide/polyamide composition according to claim 1 or 2, wherein the copolymeric block D consists of at least two, preferably at least three segments in which each segment is derived from block copolymerizing the styrenic monomer and the conjugated diene monomer and hydrogenating ethylenic double bonds, and is an optionally maleic anhydride-grafted block.

4. The polyphenylene sulfide/polyamide composition according to any of claims 1 to 3, wherein the hydrogenated styrene-diene block copolymer is a star hydrogenated styrene-diene block copolymer having the following structural formula (II) or (III)

$$[S^1\text{-}D\text{-}S^2]_m\text{-}R^1 \qquad \text{(II)},$$

or

$$[S^1\text{-}D]_m\text{-}R^1 \qquad \text{(III)},$$

wherein $S^1$, $S^2$ and D are as defined in claim 1 or 3;
$R^1$ is a residue of a coupling agent; and
m represents the number of arms of the star hydrogenated styrene-diene block copolymer, and is a number of at least 3.

5. The polyphenylene sulfide/polyamide composition according to any of claims 1 to 4, wherein the hydrogenated styrene-diene block copolymer is a star hydrogenated styrene-diene block copolymer having the following structural formula (IV) or (V)

$$[S^1\text{-}(A_x\text{-}B_y)_n\text{-}S^2]_m\text{-}R^1 \qquad \text{(IV)},$$

or

$$[S^1\text{-}(A_x\text{-}B_y)_n]_m\text{-}R^1 \qquad \text{(V)},$$

wherein $S^1$ and $S^2$, independently from each other, are polymeric blocks derived from a styrenic monomer;
$A_x$ is a polymeric microblock derived from a styrenic monomer;
$B_y$ is a polymeric microblock derived from polymerizing a conjugated diene and hydrogenating, which may contain remaining ethylenic double bonds, and is an optionally maleic anhydride-grafted microblock;
x is the average number of the styrenic monomer units in the range of 1 to 100;
y is the average number of the conjugated diene monomer units in the range of 1 to 170;
n is the average number of the structural unit $-(A_x\text{-}B_y)-$ in the range of 3 to 1100;
m represents the number of arms of the star hydrogenated styrene-diene block copolymer, and is a number in

the range of 3 to 55;
$R^1$ is a residue of a coupling agent;
and
each structural unit -($A_x$-$B_y$)- is derived from styrenic monomer and conjugated diene which are same or different from those for deriving another structural unit -($A_x$-$B_y$)-, and the numbers x and y in each structural unit -($A_x$-$B_y$)- are same or different from those in another structural unit -($A_x$-$B_y$)-.

6. The polyphenylene sulfide/polyamide composition according to any of claims 1 to 5, wherein in the hydrogenated styrene-diene block copolymer, all monomer units derived from the styrenic monomers account for 50 to 80% by weight, preferably 55 to 75% by weight, more preferably 60 to 75% of the hydrogenated styrene-diene block copolymer; and preferably, the hydrogenated styrene-diene block copolymer has a hydrogenation degree in the range of 80 to 99.99%, preferably in the range of 88 to 99%; and preferably, the hydrogenated styrene-diene block copolymer has 0 to 3 % by weight, more preferably 1 to 2 % by weight of maleic anhydride grafting units, based on the hydrogenated styrene-diene block copolymer.

7. The polyphenylene sulfide/polyamide composition according to any of claims 1 to 6, wherein the compatibilizer is a thermoplastic elastomer comprising or consisting of,

(1) 55 to 92% of the hydrogenated styrene-diene block copolymer, and
(2) 8 to 45 % of a monodispersed polystyrene,

based on the total weight of the thermoplastic elastomer.

8. The polyphenylene sulfide/polyamide composition according to any of claims 1 to 7, wherein the polyphenylene sulfide A) has a melt mass flow rate (MFR) in the range of from 10 to 3,000 g/10min, preferably from 80 to 2,000 g/10min, more preferably 80 to 300 g/10min, most preferably 100 to 200 g/10min, as measured according to ISO 1133-1-2011 at 316 °C/5kg.

9. The polyphenylene sulfide/polyamide composition according to any of claims 1 to 8, wherein the polyamide B) is selected from aliphatic polyamides; and preferably, the polyamide B) has a content of amino end groups in the range of 30 to 100 mmol/kg, more preferably 50 to 100 mmol/kg, most preferably 70 to 100 mmol/kg.

10. The polyphenylene sulfide/polyamide composition according to any of 1 to 9, which comprises

A) 20 to 50 %, preferably 20 to 40 %, by weight of the polyphenylene sulfide,
B) 20 to 50 %, preferably 20 to 40 %, by weight of the polyamide, and
C) 0.1 to 10 %, preferably 0.5 to 6%, more preferably 0.5 to 5 %, 1 to 4 % or 1 to 3 %, by weight of the compatibilizer,

based on the total weight of the polyphenylene sulfide/polyamide composition as 100%.

11. The polyphenylene sulfide/polyamide composition according to any of claims 1 to 10, which comprises

A) 20 to 50 %, preferably 20 to 40 %, by weight of the polyphenylene sulfide;
B) 20 to 50 %, preferably 20 to 40 %, by weight of the polyamide;
C) 0.1 to 10 %, preferably 0.5 to 6 %, more preferably 0.5 to 5 % by weight of the compatibilizer;
D) 10 to 50 %, preferably 20 to 40 %, by weight of a reinforcing agent, preferably glass fiber; and
E) optionally, no more than 10 % by weight of any additional additives,

based on the total weight of the polyphenylene sulfide/polyamide composition as 100%.

12. The polyphenylene sulfide/polyamide composition according to any of claims 1 to 11, which comprises

A) 20 to 40 % by weight of the polyphenylene sulfide;
B) 20 to 40 % by weight of the polyamide;
C) 0.1 to 10 %, preferably 0.5 to 6 %, by weight of the compatibilizer, in which the copolymeric block D or the polymeric microblock $B_y$ is not maleic anhydride-grafted;
D) 20 to 40% by weight of the reinforcing agent, preferably glass fiber; and
E) 0 to 10 % by weight of any additional additives;

or

A) 20 to 40 % by weight of the polyphenylene sulfide;
B) 20 to 40 % by weight of the polyamide;
C) 0.1 to 5 %, preferably 0.5 to 4 % by weight of the compatibilizer, in which the copolymeric block D or the polymeric microblock $B_y$ is a maleic anhydride-grafted block or microblock;
D) 20 to 40% by weight of the reinforcing agent, preferably glass fiber; and
E) 0 to 10% by weight of any additional additives,

based on the total weight of the polyphenylene sulfide/polyamide composition as 100 %.

**13.** Use of the hydrogenated styrene-diene block copolymer as defined in any of claims 1 to 6 or the thermoplastic elastomer as defined in claim 7 as a compatibilizer for polyphenylene sulfide and polyamide in a blend.

**14.** Use according to claim 13, wherein the polyphenylene sulfide A) has a melt mass flow rate (MFR) in the range of from 10 to 3,000 g/10min, preferably from 80 to 2,000 g/10min, more preferably 80 to 300 g/10min, most preferably 100 to 200 g/10min, as measured according to ISO 1133-1-2011 at 316°C/5kg; and/or the polyamide B) is selected from aliphatic polyamides; and preferably, the polyamide B) has a content of amino end groups in the range of 30 to 100 mmol/kg, more preferably 50 to 100 mmol/kg, most preferably 70 to 100 mmol/kg; and preferably, the compatibilizer is used in an amount of 0.1 to 10 %, more preferably 0.5 to 6 %, most preferably 0.5 to 5 %, 1 to 4 % or 1 to 3 %, based on the total weight of the blend.

**15.** An article which is obtained or obtainable from the polyphenylene sulfide/polyamide composition according to any of claims 1 to 12.

**Patentansprüche**

**1.** Polyphenylensulfid/Polyamid-Zusammensetzung, welche A) Polyphenylensulfid, B) Polyamid und C) einen Verträglichmacher umfasst, umfassend oder bestehend aus einem hydrierten Styrol-Dien-Blockcopolymer mit der folgenden Strukturformel (I)

$$S^1{}_p\text{-}D\text{-}S^2{}_q \qquad \text{(I)}$$

wobei $S^1$ und $S^2$ unabhängig voneinander Polymerblöcke sind, die von einem Styrolmonomer abgeleitet sind;
D ein Copolymerblock ist, der durch Copolymerisieren eines Styrolmonomers und eines konjugierten Dienmonomers und Hydrieren von ethylenischen Doppelbindungen abgeleitet ist, der gegebenenfalls ein mit Maleinsäureanhydrid gepfropfter Block ist;
p und q unabhängig voneinander 0 oder 1 sind, mit der Maßgabe, dass mindestens einer von p und q 1 ist;
die Styrolmonomere, von denen $S^1$, $S^2$ und D abgeleitet sind, gleich oder unterschiedlich sind; und
alle von den Styrolmonomeren abgeleiteten Monomereinheiten 40 bis 80 Gew.% des hydrierten Styrol-Dien-Blockcopolymers ausmachen.

**2.** Polyphenylensulfid/Polyamid-Zusammensetzung nach Anspruch 1, wobei der Verträglichmacher in einem Gehalt von 0,1 bis 10 %, vorzugsweise 0,5 bis 6 % enthalten ist, bezogen auf das Gesamtgewicht der Polyphenylensulfid/Polyamid-Zusammensetzung als 100 %.

**3.** Polyphenylensulfid/Polyamid-Zusammensetzung nach Anspruch 1 oder 2, wobei der Copolymerblock D aus mindestens zwei, vorzugsweise mindestens drei Segmenten besteht, worin jedes Segment aus dem Blockcopolymerisieren des Styrolmonomers und des konjugierten Dienmonomers und Hydrieren von ethylenischen Doppelbindungen abgeleitet ist, und das gegebenenfalls ein mit Maleinsäureanhydrid gepfropfter Block ist.

**4.** Polyphenylensulfid/Polyamid-Zusammensetzung nach einem der Ansprüche 1 bis 3, wobei das hydrierte Styrol-Dien-Blockcopolymer ein sternförmiges hydriertes Styrol-Dien-Blockcopolymer mit der folgenden Strukturformel (II) oder (III) ist:

$$[S^1\text{-}D\text{-}S^2]_m\text{-}R^1 \qquad \text{(II)}$$

oder

$[S^1\text{-}D]_m\text{-}R^1$ (III),

wobei $S^1$, $S^2$ und D wie in Anspruch 1 oder 3 definiert sind;
$R^1$ ein Rest eines Kopplungsmittels ist; und
m die Anzahl der Arme des sternförmigen hydrierten Styrol-Dien-Blockcopolymers wiedergibt und eine Zahl von mindestens 3 ist.

**5.** Polyphenylensulfid/Polyamid-Zusammensetzung nach einem der Ansprüche 1 bis 4, wobei das hydrierte Styrol-Dien-Blockcopolymer ein sternförmiges hydriertes Styrol-Dien-Blockcopolymer mit der folgenden Strukturformel (IV) oder (V) ist:

$[S^1\text{-}(A_x\text{-}B_y)_n\text{-}S^2]_m\text{-}R^1$ (IV)

oder

$[S^1\text{-}(A_x\text{-}B_y)_n]_m\text{-}R^1$ (V),

wobei $S^1$ und $S^2$ unabhängig voneinander Polymerblöcke sind, die von einem Styrolmonomer abgeleitet sind;
$A_x$ ein von einem Styrolmonomer abgeleiteter Polymermikroblock ist;
$B_y$ ein Polymermikroblock ist, der von Polymerisieren eines konjugierten Diens und Hydrieren abgeleitet ist, der restliche ethylenische Doppelbindungen enthalten kann und ein gegebenenfalls mit Maleinsäureanhydrid gepfropfter Mikroblock ist;
x die durchschnittliche Anzahl der Styrolmonomereinheiten im Bereich von 1 bis 100 ist;
y die durchschnittliche Anzahl der konjugierten Dienmonomereinheiten im Bereich von 1 bis 170 ist;
n die durchschnittliche Anzahl der Struktureinheit $\text{-}(A_x\text{-}B_y)\text{-}$ ist und im Bereich von 3 bis 1100 liegt;
m die Anzahl der Arme des sternförmigen hydrierten Styrol-Dien-Blockcopolymers wiedergibt und eine Zahl im Bereich von 3 bis 55 ist;
$R^1$ ein Rest eines Kopplungsmittels ist; und
jede Struktureinheit $\text{-}(A_xB_y)\text{-}$ von Styrolmonomer und konjugiertem Dien abgeleitet ist, welche dieselben wie jene, von denen eine andere Struktureinheit $\text{-}(A_xB_y)\text{-}$abgeleitet ist, oder davon verschieden sind, und die Zahlen x und y in jeder Struktureinheit - $(A_xB_y)$ - dieselben wie jene in einer anderen Struktureinheit $\text{-}(A_x\text{-}B_y)\text{-}$ oder davon verschieden sind.

**6.** Polyphenylensulfid/Polyamid-Zusammensetzung nach einem der Ansprüche 1 bis 5, wobei in dem hydrierten Styrol-Dien-Blockcopolymer alle von den Styrolmonomeren abgeleiteten Monomereinheiten 50 bis 80 Gew.%, vorzugsweise 55 bis 75 Gew.%, bevorzugter 60 bis 75 Gew.% des hydrierten Styrol-Dien-Blockcopolymers ausmachen; und vorzugsweise das hydrierte Styrol-Dien-Blockcopolymer einen Hydrierungsgrad im Bereich von 80 bis 99, 99 %, vorzugsweise im Bereich von 88 bis 99 % aufweist; und das hydrierte Styrol-Dien-Blockcopolymer vorzugsweise 0 bis 3 Gew.%, bevorzugter 1 bis 2 Gew.% Maleinsäureanhydridpfropfeinheiten aufweist, bezogen auf das hydrierte Styrol-Dien-Blockcopolymer.

**7.** Polyphenylensulfid/Polyamid-Zusammensetzung nach einem der Ansprüche 1 bis 6, wobei der Verträglichmacher ein thermoplastisches Elastomer ist, das folgendes umfasst oder daraus besteht:

(1) 55 bis 92 Gew.% des hydrierten Styrol-Dien-Blockcopolymers, und
(2) 8 bis 45 % eines monodispersen Polystyrols, bezogen auf das Gesamtgewicht des thermoplastischen Elastomers.

**8.** Polyphenylensulfid/Polyamid-Zusammensetzung nach einem der Ansprüche 1 bis 7, wobei das Polyphenylensulfid A) eine Schmelzmassenflussrate (MFR) im Bereich von 10 bis 3000 g/10 min, vorzugsweise 80 bis 2000 g/10 min, bevorzugter 80 bis 300 g/10 min, am meisten bevorzugt 100 bis 200 g/10 min hat, gemessen gemäß ISO 1133-1-2011 bei 316 °C/5 kg.

**9.** Polyphenylensulfid/Polyamid-Zusammensetzung nach einem der Ansprüche 1 bis 8, wobei das Polyamid B) ausgewählt ist aus aliphatischen Polyamiden; und das Polyamid B) vorzugsweise einen Gehalt an Aminoendgruppen im Bereich von 30 bis 100 mmol/kg, bevorzugter 50 bis 100 mmol/kg, am meisten bevorzugt 70 bis 100 mmol/kg hat.

**10.** Polyphenylensulfid/Polyamid-Zusammensetzung nach einem der Ansprüche 1 bis 9, welche umfasst:

A) 20 bis 50 Gew.%, vorzugsweise 20 bis 40 Gew.% des Polyphenylensulfids,
B) 20 bis 50 Gew.%, vorzugsweise 20 bis 40 Gew.% des Polyamids, und
C) 0,1 bis 10 Gew.%, vorzugsweise 0,5 bis 6 Gew.%, bevorzugter 0,5 bis 5 Gew.%, 1 bis 4 Gew.% oder 1 bis 3 Gew.% des Verträglichmachers,

bezogen auf das Gesamtgewicht der Polyphenylensulfid/Polyamid-Zusammensetzung als 100 %.

**11.** Polyphenylensulfid/Polyamid-Zusammensetzung nach einem der Ansprüche 1 bis 10, welche umfasst:

A) 20 bis 50 Gew.%, vorzugsweise 20 bis 40 Gew.% des Polyphenylensulfids;
B) 20 bis 50 Gew.%, vorzugsweise 20 bis 40 Gew.% des Polyamids;
C) 0,1 bis 10 Gew.%, vorzugsweise 0,5 bis 6 Gew.%, bevorzugter 0,5 bis 5 Gew.% des Verträglichmachers,
D) 10 bis 50 Gew.%, vorzugsweise 20 bis 40 Gew.% eines Verstärkungsmittels, vorzugsweise Glasfaser; und
E) gegebenenfalls nicht mehr als 10 Gew.% von jeglichen zusätzlichen Additiven,

bezogen auf das Gesamtgewicht der Polyphenylensulfid/Polyamid-Zusammensetzung als 100 %.

**12.** Polyphenylensulfid/Polyamid-Zusammensetzung nach einem der Ansprüche 1 bis 11, welche umfasst:

A) 20 bis 40 Gew.% des Polyphenylensulfids;
B) 20 bis 40 Gew.% des Polyamids;
C) 0,1 bis 10 Gew.%, vorzugsweise 0,5 bis 6 Gew.% des Verträglichmachers, wobei der Copolymerblock D oder der Polymermikroblock $B_y$ nicht mit Maleinsäureanhydrid gepfropft ist;
D) 20 bis 40 Gew.% des Verstärkungsmittels, vorzugsweise Glasfaser; und
E) 0 bis 10 Gew.% von jeglichen zusätzlichen Additiven;

oder

A) 20 bis 40 Gew.% des Polyphenylensulfids;
B) 20 bis 40 Gew.% des Polyamids;
C) 0,1 bis 5 Gew.%, vorzugsweise 0,5 bis 4 Gew.% des Verträglichmachers, wobei der Copolymerblock D oder der Polymermikroblock $B_y$ ein mit Maleinsäureanhydrid gepfropfter Block oder Mikroblock ist;
D) 20 bis 40 Gew.% des Verstärkungsmittels, vorzugsweise Glasfaser; und
E) 0 bis 10 Gew.% von jeglichen zusätzlichen Additiven;

bezogen auf das Gesamtgewicht der Polyphenylensulfid/Polyamid-Zusammensetzung als 100 %.

**13.** Verwendung des hydrierten Styrol-Dien-Blockcopolymers wie in einem der Ansprüche 1 bis 6 definiert oder des thermoplastischen Elastomers wie in Anspruch 7 definiert als Verträglichmacher für Polyphenylensulfid und Polyamid in einem Gemisch.

**14.** Verwendung nach Anspruch 13, wobei das Polyphenylensulfid A) eine Schmelzmassenflussrate (MFR) im Bereich von 10 bis 3000 g/10 min, vorzugsweise 80 bis 2000 g/10 min, bevorzugter 80 bis 300 g/10 min, am meisten bevorzugt 100 bis 200 g/10 min hat, gemessen gemäß ISO 1133-1-2011 bei 316 °C/5 kg; und/oder das Polyamid B) ausgewählt ist aus aliphatischen Polyamiden; und das Polyamid B) vorzugsweise einen Gehalt an Aminoendgruppen im Bereich von 30 bis 100 mmol/kg, bevorzugter 50 bis 100 mmol/kg, am meisten bevorzugt 70 bis 100 mmol/kg hat; und wobei der Verträglichmacher vorzugsweise in einer Menge von 0,1 bis 10 %, bevorzugter 0,5 bis 6 %, am meisten bevorzugt 0,5 bis 5 %, 1 % bis 4 % oder 1 bis 3 % verwendet wird, bezogen auf das Gesamtgewicht des Gemisches.

**15.** Artikel, der aus der Polyphenylensulfid/Polyamid-Zusammensetzung nach einem der Ansprüche 1 bis 12 erhalten wird oder erhältlich ist.

## Revendications

**1.** Composition de poly(sulfure de phénylène)/polyamide qui comprend A) du poly (sulfure de phénylène), B) du polyamide et C) un agent de compatibilité comprenant, ou constitué de celui-ci, un copolymère à blocs de styrène-diène hydrogéné ayant la formule de structure (I) suivante

S1p-D-S2q (I)

dans laquelle $S^1$ et $S^2$, indépendamment l'un de l'autre, sont des blocs polymères dérivés d'un monomère styrénique ;
D est un bloc copolymère dérivé de la copolymérisation d'un monomère styrénique et d'un monomère diène conjugué et de l'hydrogénation de doubles liaisons éthyléniques, qui est un bloc éventuellement greffé par l'anhydride maléique ;
p et q, indépendamment l'un de l'autre, valent 0 ou 1, à condition qu'au moins l'un de p et q vaille 1 ;
les monomères styréniques permettant de dériver $S^1$, $S^2$ et D sont les mêmes ou différents ; et
toutes les unités monomères dérivées des monomères styréniques représentent 40 à 80 % en poids du copolymère à blocs de styrène-diène hydrogéné.

**2.** Composition de poly(sulfure de phénylène)/polyamide selon la revendication 1, dans laquelle l'agent de compatibilité est compris en une teneur de 0,1 à 10 %, de préférence de 0,5 à 6 %, sur la base du poids total de la composition de poly(sulfure de phénylène)/polyamide en tant que 100 %.

**3.** Composition de poly(sulfure de phénylène)/polyamide selon la revendication 1 ou 2, dans laquelle le bloc copolymère D est constitué d'au moins deux, de préférence d'au moins trois segments dans lesquels chaque segment est dérivé de la copolymérisation en blocs du monomère styrénique et du monomère diène conjugué et de l'hydrogénation de doubles liaisons éthyléniques et est un bloc éventuellement greffé par l'anhydride maléique.

**4.** Composition de poly(sulfure de phénylène)/polyamide selon l'une quelconque des revendications 1 à 3, dans laquelle le copolymère à blocs de styrène-diène hydrogéné est un copolymère à blocs de styrène-diène hydrogéné en étoile ayant la formule de structure (II) ou (III) suivante

[S1-D-S2]m-R1 (II)

ou

$[S^1\text{-}D]_m\text{-}R^1$ (III),

dans laquelle $S^1$, $S^2$ et D sont tels que définis dans la revendication 1 ou 3 ;
$R^1$ est un résidu d'un agent de couplage ; et
m représente le nombre de branches du copolymère à blocs de styrène-diène hydrogéné en étoile et est un nombre valant au moins 3.

**5.** Composition de poly(sulfure de phénylène)/polyamide selon l'une quelconque des revendications 1 à 4, dans laquelle le copolymère à blocs de styrène-diène hydrogéné est un copolymère à blocs de styrène-diène hydrogéné en étoile ayant la formule de structure (IV) ou (V) suivante

$[S^1\text{- }(A_x\text{-}B_y)_n\text{-}S^2]_m\text{-}R^1$ (IV)

ou

$[S^1\text{-}(A_x\text{-}B_y)_n]_m\text{-}R^1$ (V),

dans laquelle $S^1$ et $S^2$, indépendamment l'un de l'autre, sont des blocs polymères dérivés d'un monomère styrénique ;
$A_x$ est un microbloc polymère dérivé d'un monomère styrénique ;
$B_y$ est un microbloc polymère dérivé de la polymérisation d'un diène conjugué et d'une hydrogénation, qui peut contenir des doubles liaisons éthyléniques restantes, et est un microbloc éventuellement greffé par l'anhydride maléique ;

x est le nombre moyen des unités monomères styréniques dans la plage de 1 à 100 ;
y est le nombre moyen des unités monomères diène conjugué dans la plage de 1 à 170 ;
n est le nombre moyen de l'unité de structure -($A_x$-$B_y$)-dans la plage de 3 à 1 100 ;
m représente le nombre de branches du copolymère à blocs de styrène-diène hydrogéné en étoile et est un nombre dans la plage de 3 à 55 ;
$R^1$ est un résidu d'un agent de couplage ;
et
chaque unité de structure -($A_x$-$B_y$)- est dérivée de monomère styrénique et de diène conjugué qui sont les mêmes que ceux permettant de dériver une autre unité de structure -($A_x$-$B_y$)- ou différents de ceux-ci et les nombres x et y dans chaque unité de structure -($A_x$-$B_y$)-sont les mêmes que ceux dans une autre unité de structure -($A_x$-$B_y$)- ou différents de ceux-ci.

**6.** Composition de poly(sulfure de phénylène)/polyamide selon l'une quelconque des revendications 1 à 5, dans laquelle dans le copolymère à blocs de styrène-diène hydrogéné, toutes les unités monomères dérivées des monomères styréniques représentent 50 à 80 % en poids, de préférence 55 à 75 % en poids, plus préférablement 60 à 75 % du copolymère à blocs de styrène-diène hydrogéné ; et de préférence, le copolymère à blocs de styrène-diène hydrogéné a un degré d'hydrogénation dans la plage de 80 à 99,99 %, de préférence dans la plage de 88 à 99 % ; et de préférence, le copolymère à blocs de styrène-diène hydrogéné a 0 à 3 % en poids, plus préférablement 1 à 2 % en poids d'unités de greffage anhydride maléique, sur la base du copolymère à blocs de styrène-diène hydrogéné.

**7.** Composition de poly(sulfure de phénylène)/polyamide selon l'une quelconque des revendications 1 à 6, dans laquelle l'agent de compatibilité est un élastomère thermoplastique comprenant, ou constitué de ceux-ci,

(1) 55 à 92 % du copolymère à blocs de styrène-diène hydrogéné et
(2) 8 à 45 % d'un polystyrène monodispersé,

sur la base du poids total de l'élastomère thermoplastique.

**8.** Composition de poly(sulfure de phénylène)/polyamide selon l'une quelconque des revendications 1 à 7, dans laquelle le poly(sulfure de phénylène) A) a un indice de fluidité à chaud (MFR), tel que mesuré selon la norme ISO 1133-1-2011 à 316 °C/5 kg, dans la plage allant de 10 à 3 000 g/10 min, de préférence de 80 à 2 000 g/10 min, plus préférablement de 80 à 300 g/10 min, le plus préférablement de 100 à 200 g/10 min.

**9.** Composition de poly(sulfure de phénylène)/polyamide selon l'une quelconque des revendications 1 à 8, dans laquelle le polyamide B) est choisi parmi des polyamides aliphatiques ; et de préférence, le polyamide B) a une teneur en groupes terminaux amino dans la plage de 30 à 100 mmol/kg, plus préférablement de 50 à 100 mmol/kg, le plus préférablement de 70 à 100 mmol/kg.

**10.** Composition de poly(sulfure de phénylène)/polyamide selon l'une quelconque des revendications 1 à 9, qui comprend

A) 20 à 50 %, de préférence 20 à 40 %, en poids du poly(sulfure de phénylène),
B) 20 à 50 %, de préférence 20 à 40 %, en poids du polyamide et
C) 0,1 à 10 %, de préférence 0,5 à 6 %, plus préférablement 0,5 à 5 %, 1 à 4 % ou 1 à 3 %, en poids de l'agent de compatibilité,

sur la base du poids total de la composition de poly(sulfure de phénylène)/polyamide en tant que 100 %.

**11.** Composition de poly(sulfure de phénylène)/polyamide selon l'une quelconque des revendications 1 à 10, qui comprend

A) 20 à 50 %, de préférence 20 à 40 %, en poids du poly(sulfure de phénylène) ;
B) 20 à 50 %, de préférence 20 à 40 %, en poids du polyamide ;
C) 0,1 à 10 %, de préférence 0,5 à 6 %, plus préférablement 0,5 à 5 % en poids de l'agent de compatibilité ;
D) 10 à 50 %, de préférence 20 à 40 %, en poids d'un agent renforçant, de préférence des fibres de verre ; et
E) éventuellement, pas plus de 10 % en poids de quelconques additifs supplémentaires,

sur la base du poids total de la composition de poly(sulfure de phénylène)/polyamide en tant que 100 %.

**12.** Composition de poly(sulfure de phénylène)/polyamide selon l'une quelconque des revendications 1 à 11, qui comprend

A) 20 à 40 % en poids du poly(sulfure de phénylène) ;
B) 20 à 40 % en poids du polyamide ;
C) 0,1 à 10 %, de préférence 0,5 à 6 %, en poids de l'agent de compatibilité, dans lequel le bloc copolymère D ou le microbloc polymère $B_y$ n'est pas greffé par l'anhydride maléique ;
D) 20 à 40 % en poids de l'agent renforçant, de préférence des fibres de verre ; et
E) 0 à 10 % en poids de quelconques additifs supplémentaires ;

ou

A) 20 à 40 % en poids du poly(sulfure de phénylène) ;
B) 20 à 40 % en poids du polyamide ;
C) 0,1 à 5 %, de préférence 0,5 à 4 % en poids de l'agent de compatibilité, dans lequel le bloc copolymère D ou le microbloc polymère $B_y$ est un bloc ou microbloc greffé par l'anhydride maléique ;
D) 20 à 40 % en poids de l'agent renforçant, de préférence des fibres de verre ; et
E) 0 à 10 % en poids de quelconques additifs supplémentaires,

sur la base du poids total de la composition de poly(sulfure de phénylène)/polyamide en tant que 100 %.

**13.** Utilisation du copolymère à blocs de styrène-diène hydrogéné tel que défini dans l'une quelconque des revendications 1 à 6 ou de l'élastomère thermoplastique tel que défini dans la revendication 7 en tant qu'agent de compatibilité pour du poly(sulfure de phénylène) et du polyamide dans un mélange.

**14.** Utilisation selon la revendication 13, dans laquelle le poly(sulfure de phénylène) A) a un indice de fluidité à chaud (MFR), tel que mesuré selon la norme ISO 1133-1-2011 à 316 °C/5 kg, dans la plage allant de 10 à 3 000 g/10 min, de préférence de 80 à 2 000 g/10 min, plus préférablement de 80 à 300 g/10 min, le plus préférablement de 100 à 200 g/10 min ; et/ou le polyamide B) est choisi parmi des polyamides aliphatiques ; et de préférence, le polyamide B) a une teneur en groupes terminaux amino dans la plage de 30 à 100 mmol/kg, plus préférablement de 50 à 100 mmol/kg, le plus préférablement de 70 à 100 mmol/kg ; et de préférence, l'agent de compatibilité est utilisé en une quantité de 0,1 à 10 %, plus préférablement de 0,5 à 6 %, le plus préférablement de 0,5 à 5 %, 1 à 4 % ou 1 à 3 %, sur la base du poids total du mélange.

**15.** Article qui est obtenu ou qui peut être obtenu à partir de la composition de poly(sulfure de phénylène)/polyamide selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S59155462 A
- EP 0443729 A2
- WO 2018100127 A1
- WO 2016127354 A1
- WO 2016127355 A
- WO 2016127355 A1
- WO 2016127353 A
- WO 2016127353 A1


### Non-patent literature cited in the description


- **WEIHUA TANG et al.** Toughening and Compatilization of Polyphenylene Sulfide/PA66 Blends With SEBS and Maleic Anhydride Grafted SEBS Triblock Copolymers. *Journal of Applied Polymer Science,* 2007, vol. 106, 2648-2655